# EUROPÄISCHE PATENTSCHRIFT

(11) **EP 3 765 351 B1**
(45) Veröffentlichungstag und Bekanntmachung des Hinweises auf die Patenterteilung: **25.10.2023**
(21) Anmeldenummer: 18815982.6
(22) Anmeldetag: 04.12.2018
(51) Int. Cl.: B62D 25/20, B62D 35/00

(54) **VERKLEIDUNGSEINRICHTUNG FÜR EINEN SEITENSCHWELLER EINES PERSONENKRAFTWAGENS SOWIE VERFAHREN ZUM BETREIBEN EINER DERARTIGEN VERKLEIDUNGSEINRICHTUNG**
COVER DEVICE FOR A SIDE SILL OF A PASSENGER CAR AND METHOD FOR OPERATING SUCH A COVER DEVICE
DISPOSITIF DE REVÊTEMENT D'UN BAS DE CAISSE D'UN VÉHICULE AUTOMOBILE ET PROCÉDÉ POUR FAIRE FONCTIONNER UN TEL DISPOSITIF DE REVÊTEMENT

(30) Priorität: 13.03.2018 DE 102018001993
(43) Veröffentlichungstag der Anmeldung: 20.01.2021
(73) Patentinhaber: Mercedes-Benz Group AG, 70372 Stuttgart (DE)
(72) Erfinder: HAHN, Samuel, 71034 Böblingen (DE)
(74) Vertreter: Novagraaf Group
(86) Internationale Anmeldenummer: PCT/EP2018/083408
(87) Internationale Veröffentlichungsnummer: WO 2019/174767

(56) Entgegenhaltungen:
- DE-A1- 3 613 301
- DE-A1- 4 209 164
- DE-A1-102012 018 284
- DE-A1-102017 001 662

## Beschreibung

Die Erfindung betrifft eine Verkleidungseinrichtung für einen Seitenschweller eines Personenkraftwagens gemäß Oberbegriff des Anspruchs 1. Des Weiteren betrifft die Erfindung einen Personenkraftwagen gemäß Anspruch 9.

Bei Seitenschwellern von Personenkraftwagen ergibt sich generell die Problematik, dass im Bereich unterhalb einer Türöffnung eine äußere Schwellerverkleidung vorgesehen sein sollte, welche die Türunterkante in Fahrzeugquerrichtung nach außen hin überragt oder zumindest bündig mit dieser abschließt. Eine derartige Erstreckung des jeweiligen der Schwellerverkleidung ist erforderlich, um die Seitentür und insbesondere deren Türunterkante vor Steinschlägen und Schmutz von unten her zu schützen.

Die beschriebene, wünschenswerte Erstreckung der Schwellerverkleidung in Fahrzeugquerrichtung nach außen wirft allerdings im Bereich der jeweiligen Türöffnung die Problematik auf, dass stetig steigende Anforderungen an die Ergonomie und den Komfort von Fahrzeugen, insbesondere im Hinblick auf die Bequemlichkeit beim Ein- und Ausstieg, erheblich konterkariert werden. Beim Ein- und Aussteigen führt dies nämlich dazu, dass die Schwellerverkleidung unterhalb der Türöffnung den Beinen des jeweiligen Fahrgastes im Weg ist, was gerade auch für ältere Menschen oder Personen mit eingeschränkter Mobilität zu einem eingeschränkten Komfort führen kann. Dieses Problem verschärft sich beispielsweise auch, wenn die Fahrzeugtür bei beengten Parkverhältnissen nicht weit geöffnet werden kann.

Aus der gattungsbildenden DE 10 2009 031 534 A1 ist bereits bekannt, unterhalb einer korrespondierenden Türöffnung einer Kraftwagenkarosserie ein eigensteifes äußeres Verkleidungselement anzuordnen, welches zwischen einer Verkleidungsstellung, die das Verkleidungselement im Fahrbetrieb des Kraftwagens einnimmt, und einer Freigabestellung um eine in feinem schwellernahen Bereich in Fahrzeuglängsrichtung verlaufende Lagerachse schwenkbar ist. Durch diese bereits bekannte Verkleidungseinrichtung kann somit generell die Problematik gelöst werden, einerseits eine Türunterkante einer jeweiligen Seitentür in Fahrzeugquerrichtung hinreichend zu überdecken beziehungsweise zumindest bündig mit dieser abzuschließen, um hierdurch einen entsprechenden Schutz vor Korrosion und Schmutz zu gewährleisten.

Aus der DE 36 13 301 A1 geht eine Seitenverkleidung für einen Personenkraftwagen hervor, die einen Bereich eines seitlichen Längsträgers abdeckt. Hierzu ist die Seitenverkleidung aus einem formstabilen Kunststoff hergestellt, der eine Eigensteifigkeit der fertigen Seitenverkleidung gewährleistet. Um die an ihren Längsrandbereichen an dem Längsträger befestigte Seitenverkleidung aus einer Nichtgebrauchsstellung in eine aerodynamisch günstige Funktionsstellung ausfahren zu können, bei der der mittlere Bereich der Seitenverkleidung nach außen ausgestellt ist, ist die Seitenverkleidung in ihrem fahrbahnnahen Bereich mit jeweils ein Gelenk ausbildenden Sollbiegestellen versehen, die insbesondere auch ein Ein- beziehungsweise Ineinanderklappen der Seitenverkleidung in ihrer Nichtgebrauchsstellung ermöglichen.

Aus der DE 10 2012 018 284 A1 geht eine Längsträgerverkleidung für Kraftfahrzeuge hervor, die ein aus einem flexiblen Material hergestelltes Verkleidungselement umfasst, das einenends auf einer Wickelwelle aufgewickelt ist und anderenends an einem unbeweglichen, eine Außenwand bildenden, eigensteifen Teil der Längsträgerverkleidung befestigt ist. Das flexible Verkleidungselement ist mittels einer, eine Abstützkontur für das Verkleidungselement aufweisende Verstelleinrichtung in eine Position verlagerbar, in welcher das flexible Verkleidungselement seitlich über die Außenwand der Längsträgerverkleidung vorsteht.

Aufgabe der vorliegenden Erfindung ist es, eine Verkleidungseinrichtung sowie ein Verfahren zum Betreiben einer derartigen Verkleidungseinrichtung der eingangs genannten Art zu schaffen, welche hinsichtlich ihres so genannten NVH-Verhaltens (Noise Vibration Harshness - Verhalten bei Geräuschen, Vibrationen und Rauigkeit) und hinsichtlich einer Verschmutzung optimiert sind.

Diese Aufgabe wird erfindungsgemäß durch eine Verkleidungseinrichtung mit den Merkmalen des Anspruchs 1. Vorteilhafte Ausgestaltungen mit zweckmäßigen Weiterbildungen der Erfindung sind Gegenstand der abhängigen Patentansprüche.

Um eine Verkleidungseinrichtung zu schaffen, welche hinsichtlich ihres NVH-Verhaltens (Verhalten bei Geräuschen, Vibrationen und Rauigkeit) und hinsichtlich der Verschmutzung optimiert ist, ist es erfindungsgemäß vorgesehen, dass die Lagerachse sich in einem unteren Teilbereich des Verkleidungselements befindet, dass ein flexibles Verkleidungselement vorgesehen ist, dessen eines Ende zumindest mittelbar an dem eigensteifen Verkleidungselement angeordnet und bei einer Verlagerungsbewegung zwischen der Verkleidungsstellung und der Freigabestellung mit dem eigensteifen Verkleidungselement mit bewegbar ist, dass das flexible Verkleidungselement bei in Verkleidungsstellung angeordnetem äußeren Verkleidungselement in einem durch eine der Türöffnung zugeordnete Fahrzeugtür überdeckten Bereich des Seitenschwellers angeordnet ist, und dass bei in Verkleidungsstellung angeordnetem äußeren Verkleidungselement ein Spalt zwischen dem das flexible Verkleidungselement aufweisenden Ende des eigensteifen äußeren Verkleidungselements und einem anderen Bauteil sowie ein darunter angeordneter Freiraum zwischen dem sich in der Verkleidungsstellung befindenden eigensteifen Verkleidungselement und einem weiteren Verkleidungselement oder einem Karosserieteil abgedeckt ist. Durch das flexible Verkleidungselement ist somit eine Möglichkeit geschaffen, einen sich im Zuge der Verlagerungsbewegung des eigensteifen Verkleidungselements verändernden Abstand zwischen dem entsprechenden Ende des eigensteifen Verkleidungselements einerseits und beispielsweise einem anderen Verkleidungselement andererseits durch das flexible Verkleidungselement auszugleichen. Durch das flexible Verkleidungselement kann somit beispielsweise im Fahrbetrieb des Kraftwagens ein entsprechender Spalt, Freiraum oder dergleichen zwischen dem entsprechenden Ende des eigensteifen Verkleidungselements einerseits und einem anderen Bauteil, beispielsweise einem weiteren Verkleidungselement andererseits, abgedeckt und somit unerwünschte Geräusche, Vibrationen oder eine Rauigkeit, welche ansonsten im Innenraum des Kraftfahrzeugs wahrnehmbar wäre, unterdrückt werden. Ein weiterer Vorteil des flexiblen Verkleidungselements ist es überdies, dass beispielsweise ein in Folge der Verlagerungsbewegung des eigensteifen Verkleidungselements zwischen dessen einem Ende und einem anderen Bauteil, beispielsweise einem weiteren Verkleidungselement, welches mit dem flexiblen Verkleidungselement verbunden ist, abzudecken und somit einerseits Verschmutzungen im Bereich der Verkleidungseinrichtung zu vermeiden, welche beispielsweise die Betriebssicherheit bei der Verlagerungsbewegung des eigensteifen Verkleidungselements stören könnten, und andererseits entsprechende Verschmutzungen beispielsweise des Sitzinsassen durch einen Kontakt mit inneren Bauteilen, beispielsweise Antriebsbauteilen, des eigensteifen Verkleidungselements zu unterbinden.

Das flexible Verkleidungselement kann dabei in erster Linie als ein Stoff beziehungsweise als eine Stoffbahn, gegebenenfalls jedoch auch als Folie oder dergleichen andersartiges Flächenelement gestaltet sein. Ebenso wäre ein flexibles Verkleidungselement aus einer Mehrzahl von relativ zueinander verlagerbaren oder teleskopartig relativ zueinander verschiebbaren Lamellen oder dergleichen denkbar. Bei einem Stoff beziehungsweise bei einer Stoffbahn eignet sich insbesondere ein bei einem Stoffverdeck eines Cabriolets üblicher Weise eingesetztes Material.

Der Freiraum, der sich zwischen dem sich in der Verkleidungsstellung befindenden eigensteifen Verkleidungselement und einem weiteren Verkleidungselement, insbesondere einem Innenverkleidungselement, oder einem Karosserieelement befindet und durch das flexible Verkleidungselement abdeckt ist, entsteht insbesondere in der Verkleidungsstellung des Verkleidungselements. Hierbei ist das flexible Verkleidungselement beispielsweise zumindest leicht gespannt oder dergleichen fixiert, um eine hinreichende Abdeckung zu gewährleisten.

Eine weitere vorteilhafte Ausführungsform der Erfindung sieht vor, dass dem eigensteifen Verkleidungselement ein Leistenelement, insbesondere ein Winkelleistenelement, zugeordnet ist, an welchem das zugehörige Ende des flexiblen Verkleidungselements befestigt ist. Durch ein derartiges Leistenelement beziehungsweise Winkelleistenelement kann auf besonders einfache Weise eine Überdeckung der Türunterkante der zugehörigen Seitentür durch das Verkleidungselement erzielt werden.

In diesem Zusammenhang hat es sich als weiter vorteilhaft gezeigt, wenn das Leistenelement, insbesondere das Winkelleistenelement zwischen einer Verkleidungsstellung, welches es in der Verkleidungsstellung des eigensteifen Verkleidungselements einnimmt, und einer Freigabestellung, welches es in der Freigabestellung des eigensteifen Verkleidungselements einnimmt, verlagerbar ist. Durch die Verlagerung des Leistenelements, insbesondere des Winkelleistenelements, kann dieses somit aus der Überdeckung mit der Türunterkante der zugehörigen Seitentür gebracht werden. Somit kann das Verkleidungselement mit dem Leistenelement beziehungsweise Winkelleistenelement beispielsweise einhergehend mit einer Verlagerungsbewegung der Seitentür verlagert werden, ohne dass es zu Kollisionen der beteiligten Bauelemente kommen kann. Zudem kann das eigensteife Verkleidungselement über einen großen Verstellweg verlagert werden.

Eine weitere vorteilhafte Ausführungsform sieht hierbei vor, dass das Leistenelement, insbesondere das Winkelleistenelement, an dem eigensteifen Verkleidungselement schwenkgelagert ist. Eine derartige Schwenklagerung ist besonders betriebssicher und besonders günstig geeignet, das Leistenelement beziehungsweise das Winkelleistenelement außerhalb der Überdeckung mit der Türunterkante der korrespondierenden Seitentür zu bringen.

In weiter Ausgestaltung der Erfindung hat es sich als vorteilhaft gezeigt, wenn das eigensteife Verkleidungselement aus der Verkleidungsstellung in die Freigabestellung in Fahrzeugquerrichtung nach innen verlagerbar ist, und zwar zumindest mit einem Teilbereich, beispielsweise einem oberen Teilbereich. Hierdurch kann der Ein- und Ausstieg für einen Fahrzeuginsassen erheblich vereinfacht werden.

In weiterer Ausgestaltung der Erfindung ist das flexible Verkleidungselement in der Verkleidungsstellung in einem zumindest teilweise durch eine zugeordnete Fahrzeugtür überdeckten Bereich des Seitenschwellers angeordnet. Das flexible Verkleidungselement sorgt hierbei dafür, dass kein Schmutz oder dergleichen in den Freiraum zwischen dem sich in der Verkleidungsstellung befindenden eigensteifen Verkleidungselement und einem anderen Bauelement, beispielsweise einem Innenverkleidungselement oder einem Karosserieelement, eindringen kann beziehungsweise dass aus diesem Freiraum keine Geräusche oder dergleichen in den Innenraum des Fahrzeugs gelangen können.

Eine weitere vorteilhafte Ausführungsform der Erfindung sieht vor, dass das Leistenelement, insbesondere das Winkelleistenelement, eine Aufnahmevertiefung für eine Türunterkante einer zugeordneten Fahrzeugtür aufweist. Hierdurch kann eine besonders geschützte und aerodynamische Abdeckung der Türunterkante der Fahrzeugtür erfolgen.

Im Folgenden wird ein vorteilhaftes Ausführungsbeispiel der erfindungsgemäßen Verkleidungseinrichtung anhand der Zeichnung näher erläutert. Dabei zeigen:
- Fig. 1: eine äußerst schematische Schnittansicht durch einen Seitenschweller und eine Seitentür eines Personenkraftwagens entlang einer in Fahrzeugquerrichtung beziehungsweise in Fahrzeughochrichtung verlaufenden Schnittebene, wobei eine äußere Schwellerverkleidung des Seitenschwellers in Fahrzeugquerrichtung in Überdeckung beziehungsweise bündig mit der dazugehörigen Türunterkante der Seitentür angeordnet ist;
- Fig. 2: in perspektivischer Darstellung ein Ausführungsbeispiel der erfindungsgemäßen Verkleidungseinrichtung für einen Seitenschweller eines Personenkraftwagens mit einem -im am Fahrzeug fertigmontiertem Zustand- in einem Längenbereich des Seitenschwellers unterhalb einer Türöffnung angeordneten eigensteifen äußeren Verkleidungselement, welches vorliegend in einer Verkleidungsstellung angeordnet ist, aus welcher dieses in eine Freigabestellung verlagerbar ist;
- Fig. 3: eine Perspektivansicht auf die Verkleidungseinrichtung analog zu Fig. 2, wobei das Verkleidungselement in einer anfänglichen Stellung seiner Verlagerungsbewegung aus der Verkleidungsstellung in die Freigabestellung gezeigt ist;
- Fig. 4: eine Perspektivansicht auf die Verkleidungseinrichtung gemäß den Fig. 2 und 3 im weiteren Verlauf der Verlagerungsbewegung des äußeren Verkleidungselements aus der Verkleidungsstellung in die Freigabestellung;
- Fig. 5: eine Perspektivansicht auf die Verkleidungseinrichtung analog den Fig. 2 bis 4, wobei das Verkleidungselement kurz vor Erreichen der Freigabestellung dargestellt ist;
- Fig. 6: eine Perspektivansicht auf die Verkleidungseinrichtung gemäß den Fig. 2 bis 5, wobei das äußere Verkleidungselement nach Erreichen der Freigabestellung dargestellt ist;
- Fig. 7: eine Querschnittansicht durch die Verkleidungseinrichtung gemäß den Fig. 2 bis 6, wobei das eigensteife äußere Verkleidungselement in der Verkleidungsstellung gezeigt ist und ein flexibles Verkleidungselement vorgesehen ist, dessen eines Ende unter Vermittlung eines Winkelleistenelements an dem eigensteifen Verkleidungselement angeordnet ist und ein anderes Ende des flexiblen Verkleidungselements an einem Karosserieelement angeordnet ist; und in
- Fig. 8: eine Schnittansicht durch die Verkleidungseinrichtung analog zu Fig. 7, wobei das eigensteife äußere Verkleidungselement in der Freigabestellung angeordnet und damit das flexible Verkleidungselement entsprechend mit verlagert ist.

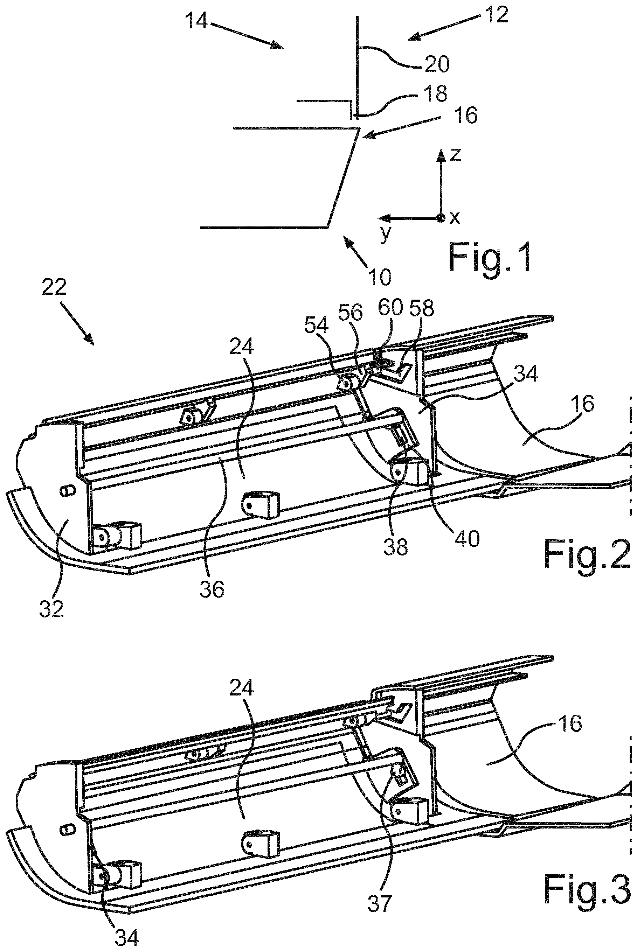

In Fig. 1 ist in einer äußerst schematischen Schnittansicht entlang einer Fahrzeughochrichtung (z-Richtung) beziehungsweise in Fahrzeugquerrichtung (y-Richtung) verlaufenden Schnittebene eine Schwellerverkleidung für einen nicht näher dargestellten Seitenschweller 10 eines Personenkraftwagens sowie eine oberhalb davon angeordnete, ausschnittsweise erkennbare Seitentür 12 zum Verschließen einer korrespondieren Türöffnung 14 dargestellt. Hierbei ist erkennbar, dass eine äußere Seitenschwellerverkleidung 16 sich in Fahrzeugquerrichtung (y-Richtung) soweit nach außen hin erstreckt, dass diese - im geschlossenen Zustand der Seitentür 12 - eine zugehörige Türunterkante 18 beziehungsweise eine Außenverkleidung 20 der Seitentür 12 überragt oder zumindest bündig mit dieser abschließt. Eine derartige Erstreckung der äußeren Seitenschwellerverkleidung 16 hat dabei den Vorteil, dass durch die - bezogen auf die in Fahrzeugquerrichtung (y-Richtung) - unterseitige Überdeckung der Türunterkante 18 beziehungsweise der gesamten Seitentür 12 Beschädigungen durch Steinschläge oder generell Verschmutzungen der Türunterkante 18 beziehungsweise eines gesamten unteren Bereichs der Seitentür 12 vermieden werden können.

Die generelle Ausgestaltung des beschriebenen Seitenschwellers 10 beziehungsweise insbesondere der äußeren Seitenschwellerverkleidung 16 wirft aber die Problematik eines erschwerten Ein- und Ausstiegs über die Türöffnung 14 in den Kraftwagen hinein beziehungsweise aus diesem heraus auf, und zwar insbesondere für ältere Menschen oder für Menschen mit eingeschränkter Mobilität. Die Problematik verschärft sich hierbei, wenn die Fahrzeugtür 12 beispielsweise bei beengten Parkverhältnissen nicht weit genug geöffnet werden kann. Insbesondere bei derartigen Situationen kann es zu einem unbequemen Ein- und Ausstieg beziehungsweise zu damit einhergehenden Verschmutzungen der Kleidung, insbesondere der Hosenbeine oder dergleichen, kommen.

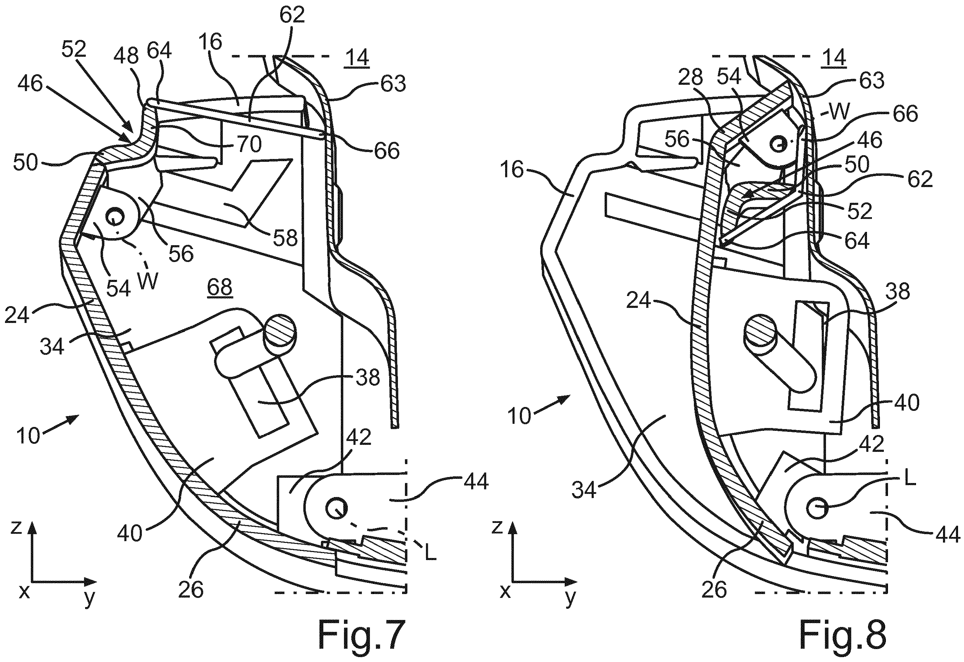

Aus diesem Grund ist im vorliegenden Fall eine Verkleidungseinrichtung vorgesehen, die im Weiteren anhand der Fig. 2 bis 6 in jeweiligen Perspektivansicht beziehungsweise in den Fig. 7 und 8 in jeweiligen Schnittansichten entlang einer in Fahrzeughochrichtung (z-Richtung) beziehungsweise in Fahrzeugquerrichtung (y-Richtung) verlaufenden Schnittebene dargestellt ist.

Hierbei ist in den Fig. 2 bis 6 zunächst die im Zusammenhang mit Fig. 1 erläuterte äußere Seitenschwellerverkleidung 16 erkennbar, welche beispielsweise aus einem formstabilen Kunststoff gebildet ist und mittels welcher ein nicht weiter erkennbares, rohbauseitiges Seitenschwellerteil nach außen beziehungsweise nach unten hin - also in Fahrzeugquerrichtung (y-Richtung) und in Fahrzeughochrichtung (z-Richtung) - abgedeckt beziehungsweise überdeckt ist.

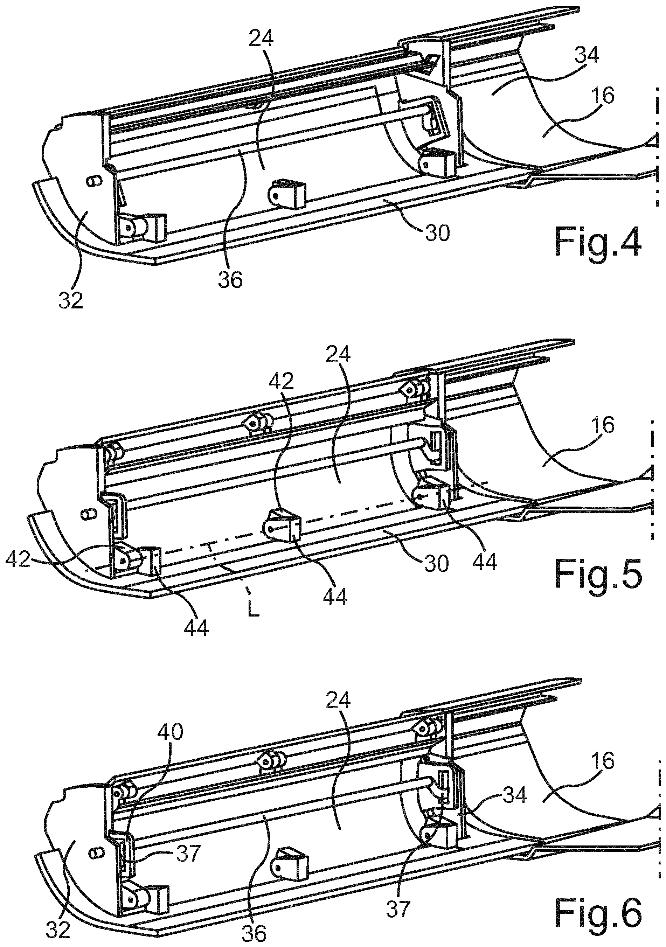

In einem Längenbereich 22 des Seitenschwellers 10, welcher sich unterhalb der Türöffnung 14 befindet, ist im vorliegenden Fall ein eigensteifes, äußeres Verkleidungselement 24 vorgesehen, welches zwischen einer in Fig. 2 erkennbaren Verkleidungsstellung und einer in Fig. 6 erkennbaren Freigabestellung auf im Weiteren noch näher beschriebene Weise verlagerbar ist. Die Fig. 3 bis 5 zeigen dabei Zwischenstellungen des Verkleidungselements 24, welches dieses bei seiner Verlagerungsbewegung zwischen der Verkleidungsstellung (Fig. 1) und der Freigabestellung (Fig. 6) einnimmt. Über dies zeigen die Fig. 7 und 8 das Verkleidungselement 24 in seinen beiden Endstellungen, nämlich der Verkleidungsstellung in Fig. 7 und der Freigabestellung in Fig. 8.

Wie hierbei insbesondere in Zusammenschau der Fig. 7 und 8 erkennbar ist, ist das eigensteife Verkleidungselement 24 um eine in Erstreckungsrichtung beziehungsweise zumindest im Wesentlichen in Fahrzeuglängsrichtung (x-Richtung) verlaufende Lagerachse L schwenkbar, welche sich in einem unteren Teilbereich 26 des Verkleidungselements 24 befindet. Entsprechend ist insbesondere in Zusammenschau der Fig. 7 und 8 auch erkennbar, dass eine Verlagerung des Verkleidungselements 24 aus der Verkleidungsstellung (Fig. 7) in die Freigabestellung (Fig. 8) dazu führt, dass dieses über die zumindest annähernd gesamte Höhe des Seitenschwellers 10 beziehungsweise der äußeren Seitenschwellerverkleidung 16 in Fahrzeugquerrichtung (y-Richtung) nach innen verlagert wird, um hierdurch den Ein- und Ausstieg eines Passagiers über die entsprechende Türöffnung 14 zu vereinfachen. Zudem ist insbesondere aus Fig. 8 erkennbar, dass ein oberer Teilbereich 28 des Verkleidungselements 24 soweit zur Fahrzeugmitte hin verlagert wird, bis dieses zumindest annähernd in Anlage mit einem Karosserieelement 63 kommt, welches im vorliegenden Fall ein Abschnitt einer Karosserieseitenwand ist, die im Bereich des Seitenschwellers 10 diesen von oben und gegebenenfalls auf dessen Außenseite zumindest teilweise überdeckt. Anstelle des Karosserieelements 63 kann es sich hier auch um ein Innenverkleidungselement handeln, welches den rohbauseitigen Teil des Seitenschwellers 10 vom Fahrzeuginnenraum her verkleidet.

Wie insbesondere aus den Fig. 2 bis 6 erkennbar ist, umfasst die Verkleidungseinrichtung ein in seiner Grundfläche etwa U-förmiges Verkleidungsteil 30, in welches das Verkleidungselement 24 in seiner Verkleidungsstellung zumindest im Wesentlichen flächenbündig integriert ist. Dieses Verkleidungsteil 30 ist dabei überlappend mit der hier gezeigten vorderen äußeren Seitenschwellerverkleidung 16 sowie einer nicht gezeigten hinteren äußeren Seitenschwellerverkleidung angeordnet, wobei die Verkleidungseinrichtung im besagten Längenbereich 22 unterhalb der zugehörigen Türöffnung 14 der entsprechenden Seitentür 12 angeordnet ist.

Von dem Verkleidungsteil 30 stehen dabei vorder- und rückseitig des Verkleidungselements 24 jeweilige Lagerstege 32, 34 ab, welche sich zumindest im Wesentlichen in Fahrzeughochrichtung (z-Richtung) und in Fahrzeugquerrichtung (y-Richtung) erstrecken. An diesen Lagerstegen 32, 34 ist eine Antriebsstange 36 drehbeweglich gelagert, welche sich zumindest im Wesentlichen in Fahrzeuglängsrichtung (x-Richtung) und etwa horizontal erstreckt. Diese Antriebsstange 36 umfasst in ihren jeweiligen, den Lagerstegen 32, 34 nahen Endbereichen eine entsprechende, U-förmige Kröpfung 37, welche mit einer zugeordneten, schlitzförmigen Kulisse 38 eines entsprechenden Kulissenelements 40 in Eingriff ist, welches seinerseits innenseitig des Verkleidungselements 24 an dessen vorderen beziehungsweise hinteren Ende befestigt ist. Eine Rotation der Antriebsstange 36 bewirkt demzufolge durch das Zusammenwirken der jeweiligen Kröpfung 37 mit der entsprechenden Kulisse 38 des entsprechenden Kulissenelements 40 die gewünschte Verlagerungsbewegung des Verkleidungselements 24 zwischen der Verkleidungsstellung gemäß Fig. 2 und 7 und der Freigabestellung gemäß Fig. 6 und 8 um die Lagerachse L.

Des Weiteren ist aus den Fig. 2 bis 6 erkennbar, dass die Lagerachse L des Verkleidungselements 24 vorliegend durch jeweilige Lagerelemente 42, 44 gebildet ist, welche einerseits innenseitig des Verkleidungselements 24 befestigt sind und andererseits innenseitig des Verkleidungsteils 30 Jedes dieser Paare von Lagerelementen 42, 44 ist hierbei durch einen Bolzen oder dergleichen miteinander schwenkbeweglich verbunden, wobei die Bolzen dieser Paare von Lagerelementen 42, 44 die Lagerachse L des Verkleidungselements 24 bilden.

Wie insbesondere aus den Fig. 7 und 8 außerdem erkennbar ist, ist am oberen Endbereich 27 des Verkleidungselements 24 ein Winkelleistenelement 46 verlagerbar gehalten, welches sich in der Verkleidungsstellung gemäß Fig. 7 entlang einer oberen Endkante 48 des Verkleidungselements 24 erstreckt und welches auf im Weiteren noch näher beschriebene Weise zwangsgesteuert während der Verlagerungsbewegung des Verkleidungselements 24 aus der Verkleidungsstellung in die Freigabestellung - und zurück - ebenfalls in seine Freigabestellung gemäß Fig. 8 verlagert wird. In der Verkleidungsstellung gemäß Fig. 7 ist das Winkelleistenelement 46 demzufolge oberseitig des Verkleidungselements 24 angeordnet und erstreckt sich mit einem Schenkel 50 horizontal und in Fahrzeugquerrichtung (y-Richtung) nach außen, und mit einem Schenkel 52 zumindest im Wesentlichen vertikal und in Fahrzeughochrichtung (z-Richtung) nach oben.

In der Freigabestellung gemäß Fig. 8 ist das Winkelleistenelement 46 im Wesentlichen unterhalb des oberen Endbereichs 28 des Verkleidungselements 24 angeordnet, wobei sich der Schenkel 52 in Fahrzeughochrichtung (z-Richtung) nach unten und der Schenkel 50 in Fahrzeugquerrichtung (y-Richtung) nach innen erstreckt.

Die Verlagerungsbewegung des Winkelleistenelements 46 zwischen seinen beiden Endstellungen - der Freigabestellung und der Verkleidungsstellung - erfolgt dabei zwangsgesteuert mit der Verlagerungsbewegung des Verkleidungselements 24. Dabei ist das Winkelleistenelement 46 über jeweilige Lagerelemente 54, 56, welche innenseitig des Verkleidungselements 24 beziehungsweise innenseitig des Winkelleistenelements 46 angeordnet sind, um einen Lagerachse W verlagerbar. Jeder der Lagerstege 32, 34 umfasst zudem an der jeweiligen, dem Verkleidungselement 24 zugewandten Innenseite eine Kulisse 58, welche vorliegend etwa L-förmig gestaltet ist und in welche ein Lagerzapfen 60 des jeweils zugehörigen Lagerelements 56, welches mit dem Winkelleistenelement 46 in Verbindung steht, in Eingriff ist. eine Zusammenschau der Fig. 2 bis 6 zeigt hierbei, dass der Lagerzapfen 60 bei der Verlagerungsbewegung des Verkleidungselements 24 entlang der L-förmigen Kulisse 58 läuft und somit die Verlagerungs- beziehungsweise Schwenkbewegung des Winkelleistenelements 46 aus dessen Verkleidungsstellung in die dessen Freigabestellung bewirkt.

Schließlich ist insbesondere aus Fig. 7 erkennbar, dass ein flexibles Verkleidungselement 62 vorgesehen ist, dessen eines Ende 64 zumindest mittelbar - nämlich im vorliegenden Fall unter Vermittlung des Winkelleistenelements 46 - an dem eigensteifen Verkleidungselement 24 angeordnet ist. Das andere Ende 66 des flexiblen Verkleidungselements 62 ist im vorliegenden Fall am Karosserieelement 63 befestigt. Gemäß Fig. 7 deckt somit das flexible Verkleidungselement 62 einen Freiraum 68 zwischen dem sich in der Verkleidungsstellung befindenden eigensteifen Verkleidungselement 24 und dem Karosserieelement 63 ab. Das flexible Verkleidungselement 62 ist im vorliegenden Fall aus einem Stoffmaterial, beispielsweise einer Stoffbahn, wie diese bei Verdecken von Cabriolets zum Einsatz kommt, gebildet. Natürlich wären hier auch andere Ausgestaltungen wie beispielsweise ein lamellenartiges oder teleskopartig verschiebbares System mehrerer Abdeckelemente denkbar.

Das flexible Verkleidungselement 62 ist in der Verkleidungsstellung in einem durch die zugeordnete Fahrzeugtür überdeckten Bereich des Seitenschwellers 10 angeordnet. Dabei ist das flexible Verkleidungselement 62 quasi aufgespannt, das heißt es deckt faltenfrei den darunter angeordneten Freiraum 68 ab und verhindert so einerseits das Eindringen von Verschmutzungen und andererseits das Einströmen von Luft während des Fahrbetriebs des Kraftwagens, was zu störenden Geräuschen führen könnte.

Das flexible Verkleidungselement 62 dient somit unter anderem zur Abdeckung des Freiraums 68, um beispielsweise eine Verschmutzung der Kleidung oder einen freien Blick in den Freiraum 68 hinein zu vermeiden. Überdies kann auch ein Schmutzeintrag in den Freiraum 68 vermieden werden. Ein weiterer Vorteil des flexiblen Verkleidungselements 62 ist es, dass das NHV-Verhalten im Innenraum des Kraftwagens verbessert wird, indem entsprechende Geräusche oder dergleichen, welche beispielsweise über den Freiraum 68 in den Innenraum des Kraftwagens eintreten könnten, vermieden werden. Schließlich verbessert das flexible Verkleidungselement 62 auch das NHV-Verhalten des Fahrzeugs insgesamt.

In Zusammenschau mit Fig. 8 wird erkennbar, dass das flexible Verkleidungselement 62 durch die Verlagerungsbewegung des Verkleidungselements 24 und des Winkelleistenelements 46 mit verlagert wird. Durch die flexible Gestaltung des Verkleidungselements 62 wird hierbei die Verlagerungsbewegung des Verkleidungselements 24 und des Winkelleistenelements 46 nicht behindert.

Das Winkelleistenelement 46 ist so ausgebildet und in seiner Verkleidungsstellung gemäß Fig. 7 angeordnet, dass dieses eine Aufnahmevertiefung 70 für die Türunterkante 18 der zugehörigen Seitentür 12 aufweist. Somit sind ein nochmals verbesserter Schutz der Türunterkante 18 sowie eine verbesserte Aerodynamik des Fahrzeugs gewährleistet.

Durch das Verlagern des Winkelleistenelements 46 zwischen dessen Verkleidungsstellung gemäß Fig. 7 und dessen Freigabestellung gemäß Fig.8 wird zudem erreicht, dass das Verkleidungselement 24 bereits vor einer Öffnung der Seitentür 12 verlagert werden kann. Die Kinematik der Antriebsstange 36 im Zusammenspiel mit den jeweiligen Kulissen 38 in den entsprechenden Kulissenelementen 40 ist so ausgebildet, dass in beiden Endlagen - der Freigabestellung und der Verkleidungsstellung - jeweils ein Totpunkt überwunden wird, um das Verkleidungselement 24 sicher in den entsprechenden Positionen zu halten. In beiden Fällen sind hierbei jeweiligen Anschläge vorgesehen, um die Position zusätzlich zu sichern.

Der Antrieb des Verkleidungselements 24 und des Winkelleistenelements 46 kann beispielsweise elektromotorisch, hydraulisch oder pneumatisch durch entsprechenden Antrieb der Antriebsstange 36 erfolgen. Hierbei kann eine Kopplung an das Öffnen der Seitentür oder das Öffnen beziehungsweise Schließen einer Schließanlage des Fahrzeugs gekoppelt sein. Natürlich sind auch andere Kopplungen denkbar.

## Patentansprüche

1. Verkleidungseinrichtung für einen Seitenschweller (10) eines Personenkraftwagens, mit einem in einem Längenbereich (22) des Seitenschwellers (10) unterhalb einer Türöffnung (14) angeordneten, eigensteifen äußeren Verkleidungselement (24), welches um eine in Fahrzeuglängsrichtung (x) verlaufende Lagerachse (L) zwischen einer Verkleidungsstellung und einer Freigabestellung schwenkbar ist und welches ein rohbauseitiges Seitenschwellerteil in Fahrzeugquerrichtung (y) nach außen überdeckt, wobei ein flexibles Verkleidungselement vorgesehen ist, dessen eines Ende zumindest mittelbar an dem eigensteifen Verkleidungselement angeordnet und bei einer Verlagerungsbewegung zwischen der Verkleidungsstellung und der Freigabestellung mit dem eigensteifen Verkleidungselement mit verlagerbar ist,
**dadurch gekennzeichnet, dass**
die Lagerachse (L) sich in einem unteren Teilbereich (26) des Verkleidungselements (24) befindet, dass das flexible Verkleidungselement (62) bei in Verkleidungsstellung angeordnetem äußeren Verkleidungselement (24) in einem durch eine der Türöffnung (14) zugeordnete Fahrzeugtür (12) überdeckten Bereich des Seitenschwellers (10) angeordnet ist, und dass bei in Verkleidungsstellung angeordnetem äußeren Verkleidungselement (24) ein Spalt zwischen dem das flexible Verkleidungselement (62) aufweisenden Ende des eigensteifen äußeren Verkleidungselements (24) und einem anderen Bauteil sowie ein darunter angeordneter Freiraum (68) zwischen dem sich in der Verkleidungsstellung befindenden eigensteifen Verkleidungselement (24) und einem weiteren Verkleidungselement oder einem Karosserieteil (63) abgedeckt ist.

2. Verkleidungseinrichtung nach Anspruch 1,
**dadurch gekennzeichnet, dass**
dem eigensteifen Verkleidungselement (24) ein Leistenelement zugeordnet ist, an welchem das zugehörige Ende (64) des flexiblen Verkleidungselement (62) befestigt ist.

3. Verkleidungseinrichtung nach Anspruch 2,
**dadurch gekennzeichnet, dass**
das Leistenelement dem eigensteifen Verkleidungselement (24) zugeordnet ist, welches zwischen einer Verkleidungsstellung, welches es in der Verkleidungsstellung des eigensteifen Verkleidungselements (24) einnimmt, und einer Freigabestellung, welches es in der Freigabestellung des eigensteifen Verkleidungselements (24) einnimmt, verlagerbar ist.

4. Verkleidungseinrichtung nach Anspruch 3,
**dadurch gekennzeichnet, dass**
das Leistenelement an dem eigensteifen Verkleidungselement (24) schwenkgelagert ist.

5. Verkleidungseinrichtung nach einem der vorhergehenden Ansprüche,
**dadurch gekennzeichnet, dass**
das eigensteife Verkleidungselement (24) aus der Verkleidungsstellung in die Freigabestellung in Fahrzeugquerrichtung nach innen verlagerbar ist.

6. Verkleidungseinrichtung nach einem der vorhergehenden Ansprüche,
**dadurch gekennzeichnet, dass**
das flexible Verkleidungselement (62) in der Verkleidungsstellung in einem durch eine zugeordnete Fahrzeugtüre überdeckten Bereich des Seitenschwellers (10) angeordnet ist.

7. Verkleidungseinrichtung nach einem der vorhergehenden Ansprüche,
**dadurch gekennzeichnet, dass**
das Leistenelement eine Aufnahmevertiefung (70) für eine Unterkante der zugeordneten Fahrzeugtüre aufweist.

8. Verkleidungseinrichtung nach einem der vorhergehenden Ansprüche, **dadurch gekennzeichnet, dass**
das flexible Verkleidungselement (62) aus einem Stoffmaterial gebildet ist.

9. Personenkraftwagen mit einem Seitenschweller (10) und einer Verkleidungseinrichtung nach einem der Ansprüche 1 bis 8.

## Claims

1. Cover device for a side sill (10) of a passenger car, comprising an inherently stiff outer cover element (24) which is arranged in a longitudinal region (22) of the side sill (10) beneath a door opening (14), is pivotable about a bearing axis (L) extending in the vehicle longitudinal direction (x) between a cover position and a release position and covers a side sill part on the bodyshell side to the outside in the vehicle transverse direction (y), a flexible cover element being provided, one end of which is arranged at least indirectly on the inherently stiff cover element and can be shifted together with the inherently stiff cover element during a shifting movement between the cover position and the release position,
**characterized in that**
the bearing axis (L) is located in a lower sub-region (26) of the cover element (24), **in that** the flexible cover element (62) is arranged in a region of the side sill (10) covered by a vehicle door (12) associated with the door opening (14) when the outer cover element (24) is arranged in the cover position, and **in that,** when the outer cover element (24) is arranged in the cover position, a gap between the end of the inherently stiff outer cover element (24) having the flexible cover element (62) and another component is covered and a free space (68) arranged thereunder between the inherently stiff cover element (24) located in the cover position and a further cover element or a body part (63) is covered.

2. Cover device according to claim 1,
**characterized in that**
a strip element, on which the relevant end (64) of the flexible cover element (62) is fastened, is associated with the inherently stiff cover element (24).

3. Cover device according to claim 2,
**characterized in that**
the strip element is associated with the inherently stiff cover element (24), which strip element can be shifted between a cover position, which it assumes in the cover position of the inherently stiff cover element (24), and a release position, which it assumes in the release position of the inherently stiff cover element (24).

4. Cover device according to claim 3,
**characterized in that**
the strip element is pivotally mounted on the inherently stiff cover element (24).

5. Cover device according to any of the preceding claims,
**characterized in that**
the inherently stiff cover element (24) can be shifted inward from the cover position into the release position in the vehicle transverse direction.

6. Cover device according to any of the preceding claims,
**characterized in that**
the flexible cover element (62) is arranged in the cover position in a region of the side sill (10) covered by an associated vehicle door.

7. Cover device according to any of the preceding claims,
**characterized in that**
the strip element has a receiving recess (70) for a lower edge of the associated vehicle door.

8. Cover device according to any of the preceding claims,
**characterized in that**
the flexible cover element (62) is formed from a fabric material.

9. Passenger car comprising a side sill (10) and a cover device according to any of claims 1 to 8.

## Revendications

1. Dispositif de revêtement pour une jupe latérale (10) d'une voiture de tourisme, comportant un élément de revêtement (24) externe intrinsèquement rigide disposé dans une zone longitudinale (22) de la jupe latérale (10) en dessous d'une ouverture de porte (14), lequel élément de revêtement peut pivoter autour d'un axe de palier (L) s'étendant dans la direction longitudinale de véhicule (x) entre une position de revêtement et une position de libération et recouvre vers l'extérieur une partie de jupe latérale côté carrosserie dans la direction transversale de véhicule (y), un élément de revêtement flexible étant prévu, dont une extrémité est disposée au moins indirectement au niveau de l'élément de revêtement intrinsèquement rigide et peut être déplacée conjointement avec l'élément de revêtement intrinsèquement rigide, lors d'un mouvement de déplacement, entre la position de revêtement et la position de libération,
**caractérisé en ce que**
l'axe de palier (L) est situé dans une zone partielle inférieure (26) de l'élément de revêtement (24), **en ce que** l'élément de revêtement (62) flexible est disposé, dans le cas d'un élément de revêtement (24) externe disposé dans la position de revêtement, dans une zone de la jupe latérale (10) recouverte par une porte de véhicule (12) associée à l'ouverture de porte (14), **et en ce que**, dans le cas d'un élément de revêtement (24) externe disposé dans la position de revêtement, une fente entre l'extrémité, présentant l'élément de revêtement (62) flexible, de l'élément de revêtement (24) externe intrinsèquement rigide et un autre composant, ainsi qu'un espace libre (68) disposé sous celui-ci entre l'élément de revêtement (24) intrinsèquement rigide se trouvant dans la position de revêtement et un autre élément de revêtement ou une partie de carrosserie (63) sont recouverts.

2. Dispositif de revêtement selon la revendication 1,
**caractérisé en ce que**
un élément formant baguette est associé à l'élément de revêtement (24) intrinsèquement rigide, auquel élément formant baguette l'extrémité (64) correspondante de l'élément de revêtement (62) flexible est fixée.

3. Dispositif de revêtement selon la revendication 2,
**caractérisé en ce que**
l'élément formant baguette est associé à l'élément de revêtement (24) intrinsèquement rigide, lequel élément formant baguette peut être déplacé entre une position de revêtement, qu'il occupe dans la position de revêtement de l'élément de revêtement (24) intrinsèquement rigide, et une position de libération, qu'il occupe dans la position de libération de l'élément de revêtement (24) intrinsèquement rigide.

4. Dispositif de revêtement selon la revendication 3,
**caractérisé en ce que**
l'élément formant baguette est monté pivotant au niveau de l'élément de revêtement (24) intrinsèquement rigide.

5. Dispositif de revêtement selon l'une des revendications précédentes,
**caractérisé en ce que**
l'élément de revêtement (24) intrinsèquement rigide peut être déplacé vers l'intérieur, dans la direction transversale de véhicule, de la position de revêtement vers la position de libération.

6. Dispositif de revêtement selon l'une des revendications précédentes,
**caractérisé en ce que**
l'élément de revêtement (62) flexible, dans la position de revêtement, est disposé dans une zone de la jupe latérale (10) recouverte par une porte de véhicule associée.

7. Dispositif de revêtement selon l'une des revendications précédentes,
**caractérisé en ce que**
l'élément formant baguette présente un creux de réception (70) pour un bord inférieur des portes de véhicule associées.

8. Dispositif de revêtement selon l'une des revendications précédentes,
**caractérisé en ce que**
l'élément de revêtement (62) flexible est formé d'un matériau textile.

9. Voiture de tourisme comportant une jupe latérale (10) et un dispositif de revêtement selon l'une des revendications 1 à 8.
